# EUROPEAN PATENT APPLICATION

(11) **EP 4 831 789 A1**
(43) Date of publication of application: **28.10.2026**
(21) Application number: 24921667.2
(22) Date of filing: 27.11.2024
(51) Int. Cl.: G06F 3/14

(54) **MESSAGE DISPLAY METHOD AND APPARATUS, AND HEAD-MOUNTED DEVICE AND STORAGE MEDIUM**

(30) Priority: 29.01.2024 CN 202410121292
(71) Applicant: Meta-Bounds Inc., Zhuhai, Guangdong 519000 (CN)
(72) Inventor: HUANG, Yiran, Zhuhai, Guangdong 519000 (CN)
(74) Representative: Knöner, Gregor
(86) International application number: PCT/CN2024/134999
(87) International publication number: WO 2025/161645

(57) **Abstract**

Embodiments of the present application provide a method and apparatus for displaying a message, a head-mounted device, and a storage medium. The method includes: in response to obtaining of a state switching instruction, controlling a target message displayed by the head-mounted device to switch from a first display state to a second display state, where a distance between a display position of the target message in the first display state and a center position of the field of view is a first distance. A distance between a display position of the target message in the second display state and the center position of the field of view is a second distance. The first distance is greater than the second distance. **In** the first display state, the target message is displayed at an edge position of the field of view of the head-mounted device. When the target message switches from the first display state to the second display state, the target message moves from the edge position of the field of view to a middle position of the field of view, that is, the target message is displayed at a position that is more convenient for viewing by a user, thereby enhancing intelligence of notification message display.

## Description

This application claims priority to Chinese Patent Application No. 2024101212928, entitled "Method and Apparatus for Displaying Message, Head-Mounted Device, and Storage Medium", filed with the China National Intellectual Property Administration on January 29, 2024, which is incorporated by reference in its entirety.

### Technical Field

The present application relates to the technical field of information display, and in particular, to a method and apparatus for displaying a message, a head-mounted device, and a storage medium.

### Background

With the continuous advancement of communication technology, an increasing number of smart devices have emerged, such as head-mounted devices including an augmented reality device and a virtual reality device. The augmented reality (AR) device may include AR glasses, an AR helmet, and the like. In the related art, for example, in the AR glasses, the AR glasses may display notification messages transmitted by AR devices, mobile phones, or other devices, or display notification messages locally generated by the AR glasses. In the process of displaying these notification messages, the AR glasses will display content of all these notification messages, including application icons, titles, timestamps, and text content of applications corresponding to the notification messages. Information structures of the displayed notification messages are relatively complex. However, in some scenarios, users need to focus their attention on particular visual objects. In this case, the complex information structures of the notification messages may interfere with viewing of other content. Therefore, how to intelligently display the notification messages is a problem needing to be solved urgently.

### Summary

Embodiments of the present application provide a method and apparatus for displaying a message, a head-mounted device, and a storage medium, and aim to enhance intelligence of switching of input modes of the head-mounted device.

In a first aspect, the embodiments of the present application provide a method for displaying a message. The method is applied to a head-mounted device, and includes:
in response to obtaining a state switching instruction, controlling a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

As at least one alternative embodiment, the method further includes:
in response to a virtual cursor on a screen of the head-mounted device moving to a display area of the target message, triggering a state switching instruction;
   or,
obtaining a gaze position of a user wearing the head-mounted device, and triggering the state switching instruction when the gaze position is located within the display area displaying the target message.

As at least one alternative embodiment, a transparency of the target message in the first display state is greater than a transparency of the target message in the second display state; and/or,
an information amount of the target message in the first display state is less than an information amount of the target message in the second display state.

As at least one alternative embodiment, the target message includes a first target message and a second target message. The first target message is a notification message with a shortest receiving duration. The second target message is a notification message in the target message except the first target message.

An information amount of the first target message in the first display state is less than an information amount of the first target message in the second display state. An information amount of the second target message in the first display state is equal to an information amount of the second target message in the second display state.

As at least one alternative embodiment, content displayed in the target message in the first display state at least comprises a title of the target message and an application icon corresponding to the target message; and/or,
a text byte count displayed in the target message in the first display state is less than or equal to a preset byte count.

As at least one alternative embodiment, the method further includes:
when the head-mounted device is in a preset scenario and the target message is displayed on the screen of the head-mounted device, controlling the target message to be in the first display state.

As at least one alternative embodiment, the method further includes:
determining a display duration when the target message is in the first display state; and
when the display duration is greater than or equal to the preset duration, hiding the target message.

As at least one alternative embodiment, the method further includes:
when the head-mounted device is in a worn state, obtaining head motion data of the user wearing the head-mounted device; and
when it is determined, based on the head motion data, that an angle of downward movement of the head of the user is greater than or equal to a preset angle, controlling the target message to switch from the first display state to a third display state, where a transparency of the target message in the third display state is less than the transparency of the target message in the first display state.

In a second aspect, the embodiments of the present application further provide an apparatus for displaying a message. The apparatus for displaying the message is applied to a head-mounted device, and the apparatus for displaying the message includes:
a state control module 610 configured to: in response to obtaining a state switching instruction, control a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

In a third aspect, the embodiments of the present application further provide a head-mounted device. The head-mounted device includes a processor, a memory, a computer program stored in the memory and executable by the processor, and a data bus for implementing connection and communication between the processor and the memory. The computer program, when executed by the processor, implements the following steps:
in response to obtaining a state switching instruction, controlling a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

In a fourth aspect, the embodiments of the present application further provide a storage medium for computer-readable storage. The storage medium stores one or more programs, and the one or more programs are executed by one or more processors to implement the following steps:
in response to obtaining a state switching instruction, controlling a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

The embodiments of this application provide a method and apparatus for displaying a message, a head-mounted device, and the storage medium. The technical solutions provided in the embodiments of the present application are implemented.

According to the embodiments of the present application, when obtaining the state switching instruction, the head-mounted device controls the target message to switch from the first display state to the second display state. The distance between the display position of the target message in the first display state and the center position of the field of view is the first distance. The distance between the display position of the target message in the second display state and the center position of the field of view is the second distance. The first distance is greater than the second distance. Thus, it can be seen that in the first display state, the target message is displayed at the edge position of the field of view of the head-mounted device. When the target message switches from the first display state to the second display state, the target message moves from the edge position of the field of view to the middle position of the field of view. That is, the target message is displayed at the position that is more convenient for viewing by a user. When the head-mounted device is an AR device, when the target message is displayed at the edge position of the field of view, it is convenient for a user wearing AR glasses to view information of a real world. When the target message is displayed at the middle position of the field of view, it is convenient for the user wearing the AR glasses to view virtual information displayed on the AR glasses. The user may trigger the state switching instruction as required and change the display position of a notification message on the same display interface, thereby enhancing intelligence of notification message display.

### Brief Description of the Drawings

For clearer descriptions of the technical solutions in the embodiments of the present application, the drawings required to be used in the description of the embodiments are briefly introduced below. It is apparent that the drawings in the description below are some embodiments of this application, and it is apparent for those skilled in the art that other drawings can be acquired according to the drawings without creative efforts.
FIG. 1 is a schematic block diagram of a structure of a head-mounted device according to an embodiment of the present application;
FIG. 2 is a flowchart of a method for displaying a message according to an embodiment of the present application;
FIG. 3 is a schematic diagram of a target message being in a second display state according to an embodiment of the present application;
FIG. 4 is a schematic diagram of a target message being in a first display state according to an embodiment of the present application;
FIG. 5 is a flowchart of another method for displaying a message according to an embodiment of the present application; and
FIG. 6 is a schematic block diagram of a structure of an apparatus for displaying a message according to an embodiment of the present application.

### Detailed Description of the Embodiments

The following clearly and completely describes the technical solutions in the embodiments of the present application with reference to the accompanying drawings in the embodiments of the present application. Apparently, the described embodiments are some of the embodiments of the present application rather than all of the embodiments. All other embodiments obtained by a person of ordinary skill in the art based on the disclosed embodiments without creative efforts shall fall within the protection scope of the present application.

The flowcharts shown in the accompanying drawings are only exemplary illustrations and do not necessarily include all the content and operations/steps, nor does they have to be executed in the order described. For example, some operations/steps can be decomposed, combined, or partially merged, so an actual execution order may change based on actual situations.

It should be understood that the terms used in this specification of the present application are only for the purpose of describing specific embodiments, but are not intended to limit the present application. As used in this specification and appended claims of the present application, unless the context clearly dictates otherwise, the singular forms "a", "an" and "the" are intended to include plural referents.

The embodiments of the present application provide a method and apparatus for displaying a message, a head-mounted device, and a storage medium. The technical solutions provided in the embodiments of the present application are as follows.

In the embodiments of the present application, the head-mounted device may be an augmented reality (AR) device, a virtual reality (VR) device, or the like.

Some embodiments of the present application are described in detail below in conjunction with the accompanying drawings. The following embodiments and features of the embodiments may be combined with each other without conflict.

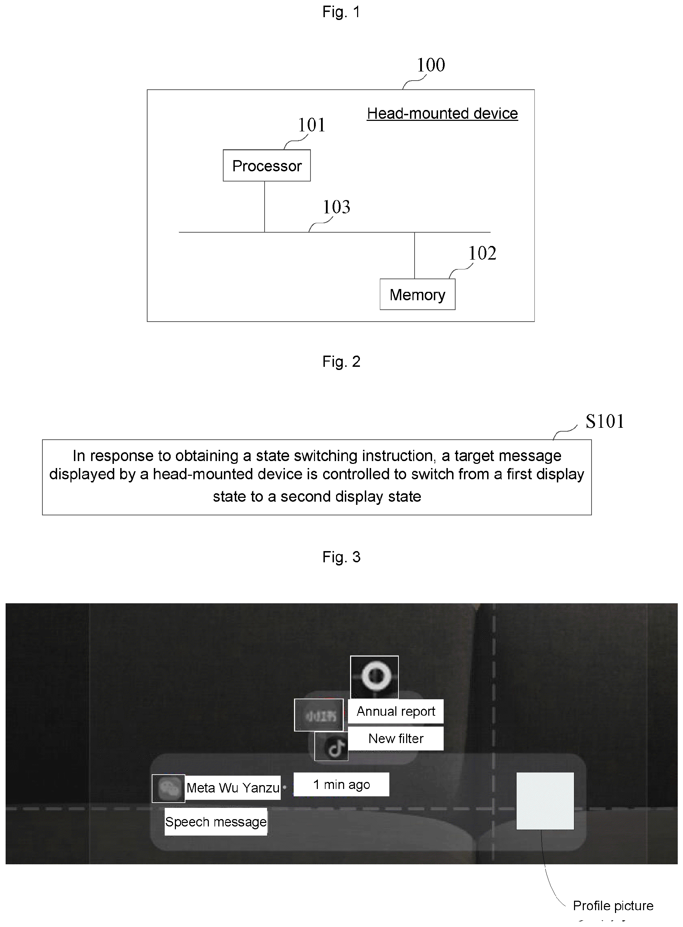

FIG. 1 is a schematic block diagram of a structure of a head-mounted device according to an embodiment of the present application.

As shown in FIG. 1, the head-mounted device 100 includes a processor 101 and a memory 102. The processor 101 is connected to the memory 102 through a bus 103. The bus is, for example, an inter-integrated circuit (I2C) bus. The head-mounted device 100 may be a target head-mounted device, a first head-mounted device, and a second head-mounted device.

For example, the processor 101 is configured to provide computing and control capabilities, to support operation of the entire head-mounted device 100. The processor 101 may be a central processing unit (CPU). The processor 101 may also be other general-purpose processors, digital signal processors (DSPs), application-specific integrated circuits (ASICs), field-programmable gate arrays (FPGAs), or other programmable logic devices, discrete gate or transistor logic devices, discrete hardware components, and the like. The general-purpose processor may be a microprocessor, or the processor may be any conventional processor, or the like.

For example, the memory 102 may be a Flash chip, a read-only memory (ROM) magnetic disk, an optical disc, a USB flash disk, a mobile disk, or the like.

A person skilled in the art can understand that the structure shown in FIG. 1 is merely a block diagram of partial structures related to the solutions in the embodiments of the present application, and does not constitute a limitation on the head-mounted device to which the solutions in the embodiments of the present application are applied. Specifically, the head-mounted device may include more or fewer components than those shown in the figure, or some components may be combined, or a different component layout may be used.

The processor 101 is configured to execute a computer program stored in the memory 102. The computer program may be configured in a head-mounted device and, when executed, implements any of the method for displaying the message provided by the embodiments of the present application.

In one embodiment, the processor is configured to execute the computer program stored in the memory and implement, when executing the computer program, the following steps:
in response to obtaining a state switching instruction, controlling a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

In one embodiment, the processor, when executing the computer program, is further configured to implement the following steps:
in response to a virtual cursor on a screen of the head-mounted device moving to a display area of the target message, triggering a state switching instruction;
   or,
obtaining a gaze position of a user wearing the head-mounted device, and triggering the state switching instruction when the gaze position is located within the display area displaying the target message.

In one embodiment, a transparency of the target message in the first display state is greater than a transparency of the target message in the second display state; and/or,
an information amount of the target message in the first display state is less than an information amount of the target message in the second display state.

In one embodiment, the target message includes a first target message and a second target message. The first target message is a notification message with a shortest receiving duration. The second target message is a notification message in the target message except the first target message.

An information amount of the first target message in the first display state is less than an information amount of the first target message in the second display state. An information amount of the second target message in the first display state is equal to an information amount of the second target message in the second display state.

In one embodiment, content displayed in the target message in the first display state at least includes a title of the target message and an application icon corresponding to the target message; and/or,
a text byte count displayed in the target message in the first display state is less than or equal to a preset byte count.

In one embodiment, the processor, when executing the computer program, is further configured to implement the following steps:
when the head-mounted device is in a preset scenario and the target message is displayed on the screen of the head-mounted device, controlling the target message to be in the first display state.

In one embodiment, the processor, when executing the computer program, is further configured to implement the following steps:
determining a display duration when the target message is in the first display state; and
when the display duration is greater than or equal to the preset duration, hiding the target message.

In one embodiment, the processor, when executing the computer program, is further configured to implement the following steps:
when the head-mounted device is in a worn state, obtaining head motion data of the user wearing the head-mounted device; and
when it is determined, based on the head motion data, that an angle of downward movement of the head of the user is greater than or equal to a preset angle, controlling the target message to switch from the first display state to a third display state, a transparency of the target message in the third display state being less than the transparency of the target message in the first display state.

It should be noted that a person skilled in the art can clearly understand that for convenience and conciseness of description, specific working processes of the head-mounted device described above can be found in corresponding processes in the following message display method embodiment, and will not be elaborated herein.

The following will describe the method for displaying the message provided in the embodiments of the present application in detail with reference to the head-mounted device in FIG. 1. It should be noted that the head-mounted device in FIG. 1 is for the purpose of explaining the method for displaying the message provided in the embodiments of the present application, but does not constitute a limitation on an application scenario of the method for displaying the message provided in the embodiments of the present application.

Referring to FIG. 2, FIG. 2 is a flowchart of a method for displaying a message according to an embodiment of the present application.

As shown in FIG. 2, the method for displaying the message is applied to a head-mounted device. The method for displaying the message includes step S101.

Step S101: In response to obtaining a state switching instruction, a target message displayed by the head-mounted device is controlled to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

In this embodiment of the present disclosure, the state switching instruction may be triggered in the head-mounted device by a user wearing the head-mounted device, or transmitted to the head-mounted device by another terminal device. The terminal device may be a mobile phone, another head-mounted device, or the like.

When the head-mounted device obtains the state switching instruction, the head-mounted device controls, in response to the state switching instruction, the target message displayed in the head-mounted device to switch from the first display state to the second display state based on the state switching instruction. In the first display state, the target message is displayed at an edge position of the field of view (FOV) of the head-mounted device. A distance between the edge position and the center position of the FOV is greater than or equal to a preset distance. That is, the first distance between the display position of the target message and the center position of the FOV in the first display state is greater than or equal to the preset distance. A value of the preset distance may be set based on a specific need, which is not limited in the embodiment. It can be understood that if the field of view is a rectangle, the center position of the field of view is a middle point of the rectangle. The display position of the target message is a center point of an area for displaying the target information. For example, in FIG. 3, a display position of a WeChat message is a center point of a display box within which the WeChat message is located. When a plurality of target messages are included, the display positions of the target messages may be a center point of a display box within which any message is located, or may be determined comprehensively by center points of display boxes within which the plurality of messages are located. If the distance between the display position of the target message in the second display state and the center position of the field of view is denoted as the second distance, and the distance between the display position of the target message in the first display state and the center position of the field of view is denoted as the first distance, the first distance is greater than the second distance.

The target message displayed by the head-mounted device is a message that is currently displayed on a virtual screen of the head-mounted device and is able be viewed by a user, including but not limited to an instant messaging message, messages from various applications, and the like. As shown in FIG. 3, the target message may be a WeChat message, an annual report in the Xiaohongshu application, a Tiktok new filter notification message, or the like.

In one embodiment, the target message may be defined as a latest message received by the head-mounted device. For example, in FIG. 3, a speech message in WeChat is a latest message received by the head-mounted device, while messages in Xiaohongshu and Tiktok are received before the speech message in WeChat is received. Therefore, among the three messages shown in FIG. 3, the speech message in WeChat is a target message, and the messages corresponding to Xiaohongshu and Tiktok are not target messages.

In this embodiment, when obtaining the state switching instruction, the head-mounted device controls the target message to switch from the first display state to the second display state. The distance between the display position of the target message in the first display state and the center position of the field of view is the first distance. The distance between the display position of the target message in the second display state and the center position of the field of view is the second distance. The first distance is greater than the second distance. Thus, it can be seen that in the first display state, the target message is displayed at the edge position of the field of view of the head-mounted device. When the target message switches from the first display state to the second display state, the target message moves from the edge position of the field of view to the middle position of the field of view. That is, the target message is displayed at the position that is more convenient for viewing by a user. If the head-mounted device is an AR device, when the target message is displayed at the edge position of the field of view, it is convenient for a user wearing AR glasses to view information of a real world. When the target message is displayed at the middle position of the field of view, it is convenient for the user wearing the AR glasses to view virtual information displayed on the AR glasses. The user may trigger the state switching instruction as needed and change the display position of a notification message on the same display interface, thereby enhancing intelligence of notification message display.

In one embodiment, the method further includes:
in response to a virtual cursor on a screen of the head-mounted device moving to a display area of the target message, triggering the state switching instruction;
   or,
obtaining a gaze position of a user wearing the head-mounted device, and triggering the state switching instruction when the gaze position is located within the display area displaying the target message.

In one embodiment, when the head-mounted device detects that the virtual cursor on the screen of the head-mounted device moves to the display area of the target message, the head-mounted device triggers the state switching instruction. A user wearing the head-mounted device may simultaneously wear a ring connected to the head-mounted device, and the user is able to control the movement of the virtual cursor through the ring. In other embodiments, the user may also move the virtual cursor to the display area of the target message through a touch control configured in the head-mounted device, to trigger the state switching instruction. Or, the virtual cursor is able to be controlled to move from other positions to the display area of the target message based on gesture information or eye movement information of the user, to trigger the state switching instruction.

In another embodiment, the head-mounted device obtains the gaze position of the user. It can be understood that the head-mounted device may obtain the gaze position of the user by using an eye tracking technology. After the head-mounted device obtains the gaze position of the user, it determines whether the gaze position of the user is located in the display area displaying the target message. If the gaze position is located within the display area of the target message, the head-mounted device will trigger the state switching instruction. If the gaze location is not within the display area of the target message, the head-mounted device will not trigger the state switching instruction.

This embodiment provides various manners of triggering the state switching instruction, thereby enhancing diversity of state switching instruction triggering and enhancing convenience of switching of display states of the target message.

In one embodiment, the transparency of the target message in the first display state is greater than the transparency of the target message in the second display state; and/or,
an information amount of the target message in the first display state is less than an information amount of the target message in the second display state.

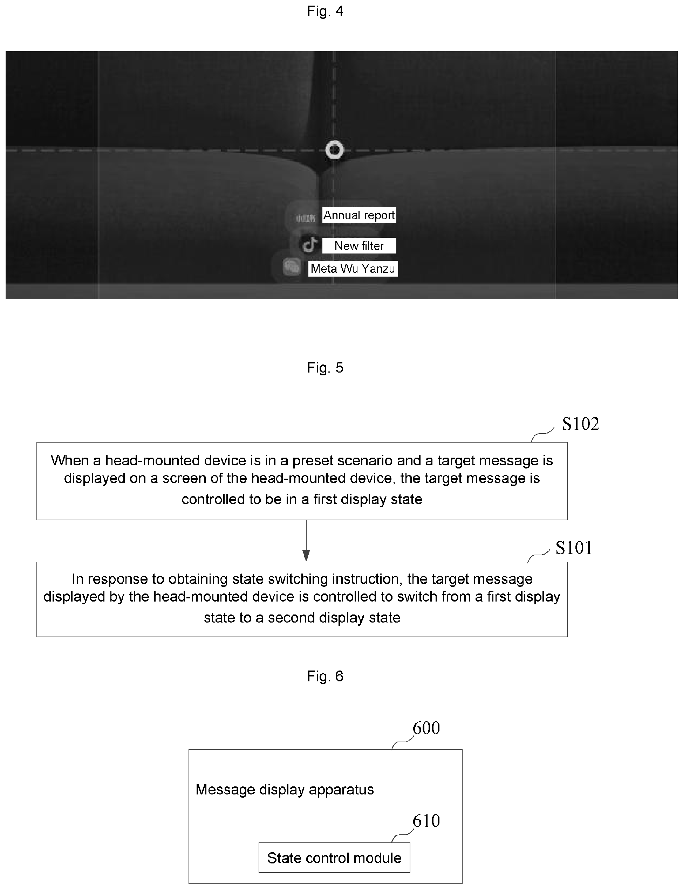

In one embodiment, the transparency of the target message in the first display state is greater than the transparency of the target message in the second display state. It can be understood that compared with the second display state, the target message is less visible to a user in the first display state. That is, it is relatively hard for the user to see the target message in the first display state. Referring to FIG. 3 and FIG. 4, FIG. 4 is a schematic diagram of a target message being in a first display state, and FIG. 3 is a schematic diagram of a target message being in a second display state.

In another embodiment, an information amount of the target message in the first display state is less than an information amount of the target message in the second display state. The magnitude of the information amount of the target message is determined based on the amount of content displayed in the target message. A larger amount of content displayed on the target message corresponds to a larger information amount. A smaller amount of content displayed in the target message corresponds to a smaller information amount. The content displayed in the target message includes but is not limited to a name and icon of an application corresponding to the target message, and a title, text content, generation time, and receiving time of the target message.

In one embodiment, the target message includes a first target message and a second target message. The first target message is a notification message with the shortest receiving duration. The second target message is a notification message in the target message except the first target message.

An information amount of the first target message in the first display state is less than an information amount of the first target message in the second display state. An information amount of the second target message in the first display state is equal to an information amount of the second target message in the second display state.

In one embodiment, the target message includes a first target message and a second target message. The first target message is a notification message with the shortest receiving duration, that is, the first target message is a notification message latest received by the head-mounted device. The second target message is a remaining notification message in the target message except the first target message. That is, the second target message is a notification message in the target message except the first target message. An information amount of the first target message in the first display state is less than an information amount of the first target message in the second display state. An information amount of the second target message in the first display state is equal to an information amount of the second target message in the second display state. In FIG. 3 and FIG. 4, the notification messages corresponding to Xiaohongshu and Tiktok are the second target messages, and the WeChat message is the first target message. From FIG. 3 and FIG. 4, it can be seen that in the first display state, information displayed in the first target message merely includes an application icon and the name (Meta Wu Yanzu) of a sender of the WeChat message. In the second display state, the information displayed in the first target message includes not only the application icon and the name of the sender of the WeChat message, but also includes the profile picture of the sender, as well as a type of the WeChat message (speech message) and generation time of the WeChat message (1 minute ago).

In this embodiment of the present disclosure, the transparency of the target message in the first display state is greater than the transparency of the target message in the second display state, and/or the information amount of the target message in the first display state is less than the information amount of the target message in the second display state, so that the target message in the first display state is visually weaker to a user and does not directly interfere with the visual content of the user, for example, does not interfere with reading or viewing of the content by the user (i.e. not interfering with the displaying of the content at the center position of the field of view). Therefore, the target message keeps clear of a core attention area of the user and the interference of the target message on the line of sight of the user is reduced. It can be understood that the core attention area of the user is an area in which the center position of the field of view is located.

In one embodiment, content displayed in the target message in the first display state at least includes a title of the target message and an application icon corresponding to the target message; and/or,
a text byte count displayed in the target message in the first display state is less than or equal to a preset byte count.

In one embodiment, the content displayed in the target message in the first display state at least includes the title of the target message and the application icon corresponding to the target message, as shown in FIG. 4. The notification message displayed in FIG. 4 merely shows the title of the target message and the application icon corresponding to the target message. It can be understood that by displaying the title of the target message and the application icon corresponding to the target message in the first display state, concise target message content can be provided to a user in the first display state, so that the user can quickly and intuitively learn the content of the target message, without requiring much reading or processing time. It can be understood that in most cases, a user can make a preliminary judgment on a notification message by viewing the title of the message and an application icon, so as to determine whether to view the notification message.

In another embodiment, the text byte count displayed in the target message in the first display state is less than or equal to the preset byte count. The preset byte count may be set by a user based on a need of the user. This embodiment does not limit this. It can be understood that by limiting the text byte count displayed in the target message in the first display state, simplicity of displaying of the target message in the first display state is further enhanced, and the interference of the target message on the line of sight of a user.

Referring to FIG. 5, in one embodiment, the information display method further includes:
Step S102: When the head-mounted device is in a preset scenario and the target message is displayed on the screen of the head-mounted device, controlling the target message to be in the first display state.

In one embodiment, if the head-mounted device is in a preset scenario and the target message is displayed on the screen of the head-mounted device, the target message is controlled to be in the first display state. The preset scenario is a scenario in which a user is doing sports, such as running or walking, or another scenario that requires a user to pay attention, such as driving.

In this embodiment of the present disclosure, by controlling the target message to be in the first display state when the head-mounted device is in a preset scenario, the intelligence of switching of the display states of the target message is enhanced by automatically controlling the target message to be in the first display state in a particular scenario.

In one embodiment, the method further includes:
determining display duration when the target message is in the first display state; and
when the display duration is greater than or equal to the preset duration, hiding the target message.

In one embodiment, when the target message is in the first display state, the head-mounted device determines the display duration of the target message in the first display state and determines whether the display duration is greater than or equal to the preset duration. A value of the preset duration may be displayed based on a specific need, such as 1 minute, 3 minutes, or 4 minutes. If the display duration of the target message in the first display state is greater than or equal to the preset duration, the head-mounted device will hide the target message. If the display duration of the target message in the first display state is less than the preset duration, the head-mounted device will continue to control the target message to be in the first display state.

It can be understood that the display duration of the first display state may be calculated by overlaying or not overlaying. When the target message switches from the first display state to the second display state for the first time, the duration of the target message in the first display state is A1. When the target message switches from the first display state to the second display state for the second time, the duration of the target message in the first display state is A2. When the display duration is calculated by overlaying, the display duration of the target message in the first display state is A1+A2. When the display duration is calculated by not overlaying, the display duration of the target message in the first display state is A2.

In this embodiment, after the display duration of the target message in the first display state reaches a particular duration, the target message is hidden, thereby avoiding a phenomenon that the target message is displayed on the screen of the head-mounted device all the time, and enhancing a space utilization rate of the screen of the head-mounted device.

In one embodiment, the method further includes:
when the head-mounted device is in a worn state, obtaining head motion data of the user wearing the head-mounted device; and
when it is determined, based on the head motion data, that an angle of downward movement of the head of the user is greater than or equal to a preset angle, controlling the target message to switch from the first display state to a third display state, wherein the transparency of the target message in the third display state is less than the transparency of the target message in the first display state.

In one embodiment, when the head-mounted device is in the worn state, the head-mounted device obtains the head motion data of the user wearing the head-mounted device. A sensor for detecting whether the head-mounted device is in the worn state may be disposed within the head-mounted device. For example, when the head-mounted device is smart glasses, the sensor may be disposed at a position, corresponding to the eyebrow center of the user, in a glasses frame. The sensor may be a proximity light sensor or another distance sensor. The head motion data may represent an angle and direction of rotation of the head of the user.

After the head-mounted device obtains the head motion data of the user and determines, based on the head motion data, that an angle of downward movement of the head of the user is greater than or equal to a preset angle, the target message is controlled to switch from the first display state to a third display state. The transparency of the target message in the third display state is less than the transparency of the target message in the first display state. The preset angle may be set based on a specific need. For example, the preset angle may be 3 degrees, 4 degrees, 8 degrees, or the like. The transparency of the target message in the third display state is equal to or greater than the transparency of the target message in the second display state, and an information amount of the target message in the third display state is less than the transparency of the target message in the second display state. In another embodiment, an information amount of the target message in the third display state is equal to the information amount of the target message in the first display state.

It can be understood that if a distance between a display position of the target message in the third display state and the center position of the field of view is a third distance, the first distance is greater than the third distance, and the third distance is greater than the second distance.

In this embodiment of the present disclosure, by setting the third display state between the first display state and the second display state, the target message is in a gradually changing process, thereby enhancing intelligence of a changing process of the display states of the target message.

Referring to FIG. 6, FIG. 6 is a schematic block diagram of a structure of an apparatus for displaying a message according to an embodiment of the present application.

As shown in FIG. 6, the apparatus for displaying the message 600 is applied to a head-mounted device. The apparatus for displaying the message 600 includes:
a state control module 610 configured to: in response to obtaining a state switching instruction, control a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

In an embodiment, the apparatus for displaying the message 600 includes:
an instruction triggering module configured to: in response to a virtual cursor on a screen of the head-mounted device moving to a display area of the target message, trigger a state switching instruction.

The instruction triggering module is further configured to: obtain a gaze position of a user wearing the head-mounted device, and trigger the state switching instruction when the gaze position is located within the display area displaying the target message.

In one embodiment, a transparency of the target message in the first display state is greater than a transparency of the target message in the second display state; and/or,
an information amount of the target message in the first display state is less than an information amount of the target message in the second display state.

In one embodiment, the target message includes a first target message and a second target message. The first target message is a notification message with a shortest receiving duration. The second target message is a notification message in the target message except the first target message.

An information amount of the first target message in the first display state is less than an information amount of the first target message in the second display state. An information amount of the second target message in the first display state is less than an information amount of the second target message in the second display state.
In one embodiment, content displayed in the target message in the first display state at least includes a title of the target message and an application icon corresponding to the target message; and/or,
a text byte count displayed in the target message in the first display state is less than or equal to a preset byte count.

In one embodiment, the state control module 610 is further configured to: when the head-mounted device is in a preset scenario and the target message is displayed on the screen of the head-mounted device, control the target message to be in the first display state.

In one embodiment, the apparatus for displaying the message 600 further includes:
a duration determination module configured to determine a display duration when the target message is in the first display state; and
a message hiding module configured to: when the display duration is greater than or equal to the preset duration, hide the target message.

In one embodiment, the apparatus for displaying the message 600 further includes:
a data obtaining module configured to: when the head-mounted device is in a worn state, obtain head motion data of the user wearing the head-mounted device.

The state control module 610 is further configured to: when it is determined, based on the head motion data, that an angle of downward movement of the head of the user is greater than or equal to a preset angle, control the target message to switch from the first display state to a third display state, where a transparency of the target message in the third display state is less than the transparency of the target message in the first display state.

It should be noted that a person skilled in the art can clearly understand that for convenience and conciseness of description, specific working processes of the apparatus for displaying the message described above can be found in the corresponding processes in the foregoing message display method embodiment, and will not be elaborated herein.

The embodiments of the present application further provide a storage medium for computer-readable storage. The storage medium stores one or more programs, and the one or more programs are executed by one or more processors to implement the following steps:
in response to obtaining a state switching instruction, controlling a target message displayed by the head-mounted device to switch from a first display state to a second display state, where a distance between a display position of the target message in the first display state and a center position of the field of view is a first distance; a distance between a display position of the target message in the second display state and the center position of the field of view is a second distance; and the first distance is greater than the second distance.

It should be noted that a person skilled in the art can clearly understand that for convenience and conciseness of description, specific working process of the storage medium described above can be found in the embodiments of the foregoing message display method.

The storage medium can be an internal storage unit of the head-mounted device provided in the foregoing embodiment, for example, a hard disk drive or an internal memory of the head-mounted device. The storage medium can also be an external storage device of the head-mounted device, such as a plug-in hard disk drive, a smart media card (SMC), a secure digital (SD) card, or a flash card that is equipped on the head-mounted device.

A person of ordinary skill in the art can understand that all or some steps in the disclosed method and functional modules/units in the disclosed system or apparatus can be implemented as software, firmware, hardware, and appropriate combinations thereof. In the hardware embodiment, the division between the functional modules/units mentioned in the above description does not necessarily correspond to the division of physical components. For example, a physical component can have multiple functions, or a function or step can be performed collaboratively by several physical components. Some or all physical components can be implemented as software executed by a processor, such as a central processing unit, a digital signal processor, or a microprocessor, or as hardware, or as integrated circuits, such as dedicated integrated circuits. Such software can be distributed on a computer-readable medium. The computer-readable medium may include a computer storage medium (or non-transient medium) and a communication medium (or transient medium). As known to a person of ordinary skill in the art, the term, computer storage medium, includes volatile and non-volatile media, and removable and non-removable media implemented by using any method or technology used for storing information (such as computer-readable instructions, data structures, program modules, or other data). The computer storage media include but are not limited to a random access memory (RAM), a read only memory (ROM), an electrically erasable programmable read only memory (EEPROM), a flash memory or other storage technologies, a CD-ROM, a digital versatile disc (DVD) or other optical disc storages, a cassette, a magnetic tape, a disk storage or other magnetic storage devices, or any other media that can be used for storing desired information and can be accessed by computers. In addition, it is well known to a person of ordinary skill in the art that the communication media typically include computer-readable instructions, data structures, program modules, or other data in modulated data signals such as carriers or other transmission mechanisms, and may include any information delivery medium.

It should be understood that the term "and/or" used in this specification of the present application and the appended claims refers to any combination of one or more of the associated listed items and all possible combinations, including these combinations. It should be noted that in this specification, the term "include", "comprise", or any other variants thereof are intended to encompass in a non-exclusive mode, so that a process, a method, an object, or a system including a series of elements not only includes those elements, but also includes other elements that are not explicitly listed, or elements that are inherent to such a process, a method, an object, or a system. Without more limitations, an element defined by a sentence "including one......" does not exclude existence of other same elements in the process, the method, the object, or the system that includes the element.

The sequential numbers of the foregoing embodiments of the present application are merely for description purpose but do not imply the preference of the embodiments. The foregoing descriptions are merely specific embodiments of the present application, but are not intended to limit the protection scope of the present application. Any person skilled in the art can easily think of various equivalent modifications or replacements within the technical scope disclosed by the present application. These modifications or replacements shall all fall within the protection scope of the present application. Therefore, the protection scope of the present application shall be subject to the protection scope of the claims.

## Claims

1. A method for displaying a message, wherein the method is applied to a head-mounted device, and comprises:
in response to obtaining a state switching instruction, controlling a target message displayed by the head-mounted device to switch from a first display state to a second display state, wherein a distance between a display position of the target message in the first display state and a center position of the field of view is a first distance; a distance between a display position of the target message in the second display state and the center position of the field of view is a second distance; and the first distance is greater than the second distance.

2. The method for displaying the message as claimed in claim 1, wherein the method further comprises:
in response to a virtual cursor on a screen of the head-mounted device moving to a display area of the target message, triggering the state switching instruction;
or,
obtaining a gaze position of a user wearing the head-mounted device, and triggering the state switching instruction when the gaze position is located within the display area displaying the target message.

3. The method for displaying the message as claimed in claim 1, wherein a transparency of the target message in the first display state is greater than a transparency of the target message in the second display state; and/or,
an information amount of the target message in the first display state is less than an information amount of the target message in the second display state.

4. The method for displaying the message as claimed in claim 3, wherein the target message comprises a first target message and a second target message; the first target message is a notification message with a shortest receiving duration; the second target message is a notification message in the target message except the first target message;
an information amount of the first target message in the first display state is less than an information amount of the first target message in the second display state; and an information amount of the second target message in the first display state is equal to an information amount of the second target message in the second display state.

5. The method for displaying the message as claimed in claim 1, wherein content displayed in the target message in the first display state at least comprises a title of the target message and an application icon corresponding to the target message; and/or,
a text byte count displayed in the target message in the first display state is less than or equal to a preset byte count.

6. The method for displaying the message as claimed in claim 1, wherein the method further comprises:
when the head-mounted device is in a preset scenario and the target message is displayed on a screen of the head-mounted device, controlling the target message to be in the first display state.

7. The method for displaying the message as claimed in claim 1, wherein the method further comprises:
determining a display duration when the target message is in the first display state; and
when the display duration is greater than or equal to a preset duration, hiding the target message.

8. The method for displaying the message as claimed in any one of claims 1 to 7, wherein the method further comprises:
when the head-mounted device is in a worn state, obtaining head motion data of a user wearing the head-mounted device; and
when it is determined, based on the head motion data, that an angle of downward movement of the head of the user is greater than or equal to a preset angle, controlling the target message to switch from the first display state to a third display state, wherein a transparency of the target message in the third display state is less than a transparency of the target message in the first display state.

9. An apparatus for displaying a message, wherein the apparatus for displaying the message is applied to a head-mounted device, and the apparatus for displaying the message comprises:
a state control module 610 configured to: in response to obtaining a state switching instruction, control a target message displayed by the head-mounted device to switch from a first display state to a second display state, wherein a distance between a display position of the target message in the first display state and a center position of the field of view is a first distance; a distance between a display position of the target message in the second display state and the center position of the field of view is a second distance; and the first distance is greater than the second distance.

10. A head-mounted device, wherein the head-mounted device comprises a processor, a memory, a computer program stored in the memory and executable by the processor, and a data bus for implementing connection and communication between the processor and the memory, wherein the computer program, when executed by the processor, implements the following steps:
in response to obtaining a state switching instruction, controlling a target message displayed by the head-mounted device to switch from a first display state to a second display state, wherein a distance between a display position of the target message in the first display state and a center position of the field of view is a first distance; a distance between a display position of the target message in the second display state and the center position of the field of view is a second distance; and the first distance is greater than the second distance.

11. The head-mounted device as claimed in claim 10, wherein the processor is further configured to implement the following:
in response to a virtual cursor on a screen of the head-mounted device moving to a display area of the target message, triggering the state switching instruction;
or,
obtaining a gaze position of a user wearing the head-mounted device, and triggering the state switching instruction when the gaze position is located within the display area displaying the target message.

12. The head-mounted device as claimed in claim 10, wherein the processor is further configured to implement the following:
a transparency of the target message in the first display state is greater than a transparency of the target message in the second display state; and/or,
an information amount of the target message in the first display state is less than an information amount of the target message in the second display state.

13. The head-mounted device as claimed in claim 12, wherein the processor is further configured to implement the following:
the target message comprises a first target message and a second target message; the first target message is a notification message with a shortest receiving duration; the second target message is a notification message in the target message except the first target message;
an information amount of the first target message in the first display state is less than an information amount of the first target message in the second display state; and an information amount of the second target message in the first display state is equal to an information amount of the second target message in the second display state.

14. The head-mounted device as claimed in claim 10, wherein the processor is further configured to implement the following:
content displayed in the target message in the first display state at least comprises a title of the target message and an application icon corresponding to the target message; and/or,
a text byte count displayed in the target message in the first display state is less than or equal to a preset byte count.

15. The head-mounted device as claimed in claim 10, wherein the processor is further configured to implement the following:
when the head-mounted device is in a preset scenario and the target message is displayed on a screen of the head-mounted device, controlling the target message to be in the first display state.

16. The head-mounted device as claimed in claim 10, wherein the processor is further configured to implement the following:
determining a display duration when the target message is in the first display state; and
when the display duration is greater than or equal to the preset duration, hiding the target message.

17. The head-mounted device as claimed in any one of claims 10 to 16, wherein the processor is further configured to implement the following:
when the head-mounted device is in a worn state, obtaining head motion data of a user wearing the head-mounted device; and
when it is determined, based on the head motion data, that an angle of downward movement of the head of the user is greater than or equal to a preset angle, controlling the target message to switch from the first display state to a third display state, wherein a transparency of the target message in the third display state is less than a transparency of the target message in the first display state.

18. A storage medium for computer-readable storage, wherein the storage medium stores one or more programs, and the one or more programs are executed by one or more processors to implement the following steps:
in response to obtaining a state switching instruction, controlling a target message displayed by the head-mounted device to switch from a first display state to a second display state, wherein a distance between a display position of the target message in the first display state and a center position of the field of view is a first distance; a distance between a display position of the target message in the second display state and the center position of the field of view is a second distance; and the first distance is greater than the second distance.

19. The storage medium as claimed in claim 18, wherein the processor is further configured to implement the following:
in response to a virtual cursor on a screen of the head-mounted device moving to a display area of the target message, triggering a state switching instruction;
or,
obtaining a gaze position of a user wearing the head-mounted device, and triggering the state switching instruction when the gaze position is located within the display area displaying the target message.

20. The storage medium as claimed in claim 18, wherein the processor is further configured to implement the following:
a transparency of the target message in the first display state is greater than a transparency of the target message in the second display state; and/or,
an information amount of the target message in the first display state is less than an information amount of the target message in the second display state.
